# EUROPEAN PATENT SPECIFICATION

(11) **EP 3 151 106 B1**
(45) Date of publication and mention of the grant of the patent: **06.07.2022**
(21) Application number: 15187757.8
(22) Date of filing: 30.09.2015
(51) Int. Cl.: G06F 3/12

(54) **METHOD FOR TRACKING JOBS IN A REPROGRAPHIC APPARATUS, COMPUTER-PROGRAM, AND REPROGRAPHIC APPARATUS**
VERFAHREN ZUR VERFOLGUNG VON AUFTRÄGEN IN EINER REPROGRAFISCHEN VORRICHTUNG, COMPUTERPROGRAMM UND REPROGRAFISCHE VORRICHTUNG
PROCÉDÉ DE SUIVI DE TÂCHES DANS UN APPAREIL REPROGRAPHIQUE, PROGRAMME INFORMATIQUE ET APPAREIL REPROGRAPHIQUE

(43) Date of publication of application: 05.04.2017
(73) Proprietor: Canon Production Printing Netherlands B.V., 5914 HH Venlo (NL)
(72) Inventor: SCHOENMAKERS, Erik J.W., 5914 CA Venlo (NL); BOUWMANS, Peter F.M., 5914 CA Venlo (NL)
(74) Representative: Canon Production Printing IP Department

(56) References cited:
- EP-A1- 1 087 288
- JP-A- 2012 093 601
- US-A1- 2008 309 964

## Description

### Field of the Invention

The present invention generally pertains to tracking jobs in reprographic apparatuses. The present invention relates to a method for tracking jobs in a reprographic apparatus. The present invention further relates to a computer program implementing such a method.

The present invention also relates to a reprographic apparatus configured to track jobs.

### Background Art

It is known in the reprographic industry to either assign media types to jobs, such as print jobs, and with the aid of a further assignment assigning media types to media input locations of a reprographic apparatus, determining a relation between one or more input locations and a job. Furthermore, it is also known to assign one or more output location of a reprographic apparatus, such as a printer, to a job. In the user interface of the reprographic apparatus the properties and assignments of a job may be inspected and assigned input and output locations of the job can be learned this way.

Reprographic apparatuses comprise printers, copiers, facsimile device, multifunctional devices, and finishers such as folders, staplers, stackers, punchers, cutters, trimmers, etc. Furthermore, reprographic apparatuses comprise combinations thereof such as printers with one or more inline finishers. The examples herein will mainly show printers, but are equally applicable to other reprographic apparatuses.

A disadvantage of the known reprographic apparatuses is that their operation and the user interfaces reflect the job-centric organisation of the reprographic workflow. Although a job is most of the time a logical way of organising media that need the same or similar processing or organising media that are part of the same customer order, there are use cases where the job-centric approach does not fully suit an operators needs.

One such use cases is medium or high volume printers that are used for printing many jobs and are used in unattended mode, for example printing many jobs unattended during the night. When an operator returns to the printer at the end of the night, he may be find many jobs being delivered to the output location of the printer. Before he can proceed with the printed jobs, he first has the task of identifying which sheets or stacks belong to which jobs. This problem has been addressed in the past by outputting banner sheets or separator sheets between, before, or after jobs comprising identification information such as job identifiers or order identifiers. This makes life much easier, but still may be cumbersome, for example if the operator quickly wants to identify a specific job in the stack output by the printer. US 2008/0309964 discloses the capability of visualizing the stacks of media representing completed jobs, jobs being currently processed and scheduled jobs.

The object of the present invention is to improve on the identification of media job assignments.

### Summary of the Invention

In a first aspect of the present invention, a method is provided for tracking jobs in a reprographic apparatus according to claim 1.

Scheduling a job comprises assigning the job directly or indirectly to the processing device of the reprographic apparatus. As most reprographic apparatuses process jobs in sequence, this usually comprises placing the job in a processing queue such as a print queue. The ordering of this sequence is what is of interest for this invention as, in conjunction with scheduled media source locations and scheduled output locations, this is what determines in what orders media are removed from a media source location and in what order media are delivered to an output location.

Although in general a scheduling action is something that is done in advance, the word scheduled in "scheduled output location" and "scheduled job" refers in this context only to the scheduling action having completed. For example, a job that has been scheduled and subsequently processed, is, after processing has completed, not to be regarded as no longer being a "scheduled job"; it is still a "scheduled job".

An output location may be an output bin, an output tray, an output table, a stacker, etc. Multiple stacks on a single table may be regarded as multiple output locations as this allows the invention to visualise what jobs have ended up in what stack or what jobs to-be-printed will end up in what stacks.

Note that for jobs that have been processed and delivered to the output location, the current location and the output location are one and the same.

In the present invention, a method is provided, wherein the size of the visualised stack of sheets is proportional to the size of the actual stack of sheets for a job. Visualising stacks with sizes proportional to the actual stack size makes it easier for an operator to recognise a specific job he is looking for in an output stack, especially if individual jobs can be easily distinguished because jobs have been stacked in staggered fashion, or because part of a banner page, separator page, or tab extends from the stack delimiting separate jobs.

Visualising the size of the stack proportional to the actual stack size may be done by only using the number of sheets in the job to determine the stack size. Alternatively, variations in sheet thickness may be taken into account by either using actual sheet thickness, or using media weight (which is in reprographic applications usually expressed as a weight per surface area, such as g/m²).

In another aspect not being part of the claimed invention the job that is being processed is visualised with a constant stack size during the processing of the job. As the reprographic apparatus will remove media from a media source stack, such as a media stack in a media input module, and move them to a scheduled output stack, the size of the actual media source stack will decrease during processing, while the size of the actual stack in the output location will grow. Keeping the size constant during processing of the job has the advantage that while the job is being processed, a stack is discernible in the visualisation of both the media source location, such as the media input module, as well as the output location, as the actual stack in the media source location will gradually shrink during processing and become very small near the end of processing the job, while the stack in the output location will initially be very small right after the job started processing.

In a further aspect not being part of the claimed invention, stacks are visualised with a minimal stack size. The visualised stack size will be proportional to the actual stack size, unless the visualised stack size is below the minimal stack size. In that case, the stack is visualised with the minimal stack size. This way, all individual jobs are always discernible in the user interface. Furthermore, this always allows for a minimum of meta-data that may be visualised in the actual stacks, such as job numbers and number of sheets in the job. Alternatively, the sizes of the visualised source stack and visualised output stack are also for the job being processed proportional to the actual source stack and the actual output stack, meaning that during processing of the job being printed the operator sees the visualised source stack shrink in the user interface while the visualised output stack grows.

The stack size as mentioned herein refers in a preferred embodiment to stack height. In such an embodiment, not being part of the claimed invention, the visualised width of the stacks may be kept constant independent of the actual stack width. Alternatively, the visualised width is proportional to the actual stack width to further facilitate the operator in matching a visualised stack with an actual stack. As it is possible that media size varies among sheets in a single job, the visualisation might actually visualise widths of groups of identically sized sheets in a job, or alternatively use a single width for the whole job such as the smallest width, the dominant width, or the biggest width in the job.

In a further aspect of the present invention, a method is provided, wherein the representation of the output location shows a processed job stacked on top of other processed jobs that have been delivered earlier to the output location.

In again a further aspect of the present invention a method is provided, wherein the representation of the scheduled output location shows a job that is being processed on top of already processed jobs.

In another aspect of the present invention a method is provided, wherein the representation of the output location shows an unprocessed job stacked on top of processed jobs.

It all boils down to visualising jobs ordered in the actual order wherein the media of the job are being delivered to the scheduled output location. Jobs already processed are visualised on top of jobs that have been processed earlier and delivered to the same output location. The job being currently processed is visualised on top of the jobs for which processing has already completed and that have already been delivered to the output location. Jobs that have not yet started are again visualised on top of the job being processed and the jobs for which processing has already completed. For jobs that have not yet started the internal ordering is that a job is visualised on top of jobs that have been scheduled to be processed earlier.

In a further aspect of the present invention, jobs that have not yet started are only visualised in the output location if they still fit in the output location given stack height restrictions in the output location.

In the present invention the job that is being processed and/or the job that is yet unprocessed is visualised distinctly from the already processed jobs in order to communicate to the user that the job is being processed respectively that processing of the job has not started yet. It is advantageous to the operator to be able to visually determine which jobs he can already expect in the output location and which jobs will not be present yet. The job being currently processed is a special case, as it will be partly present in the output location. The jobs that have already completed may for example be visualised with higher contrast, more saturated colours, highlighted features such as thicker lines, or a specific mark such as a check mark, or specific text label, etc., while jobs that have not started yet may be visualised with lower contrast, more subdued colours, no highlighting, other specific marks or text labels, or the absence thereof, etc.

In the present invention the representation of the current location of media comprises, for a job to be processed or a job being processed, a representation of a media source location, such as a media input module of the reprographic apparatus, and visualising a stack of media representing the scheduled job comprises visualising a stack of media in the media source location assigned to the job to be processed or the job being processed.

For the media in a media source location, such as a media input module the reverse applies compared to the output location. Where the stacks in an output location are built bottom-up, media are removed from an input module top-down. So the top of the media stack is assigned to the job currently being processed. Jobs that are scheduled for processing later, or located lower in the stack and therefore visualised below earlier jobs.

In a further aspect of the present invention, the part of the stack that has not been assigned to a job yet is visualised distinctly from the media in the stack that are assigned to jobs. This way, the operator can quickly see whether there is media left for further jobs that still need to be scheduled.

In another aspect of the present invention a computer-program product is provided according to claim 7.

In one embodiment of the present invention a reprographic apparatus is provided according to claim 8.

In the present invention a reprographic apparatus is provided, wherein the size of the visualised stack of sheets is proportional to the size of the actual stack of sheets for a job.

In another embodiment of the present invention a reprographic apparatus is provided, wherein the representation of the output location shows a processed job stacked on top of other processed jobs that have been delivered earlier to the output location.

In again a further embodiment of the present invention a reprographic apparatus is provided, wherein the representation of the scheduled output location shows a job that is being processed on top of already processed jobs.

In again another embodiment of the present invention a reprographic apparatus is provided, wherein the representation of the output location shows an unprocessed job stacked on top of processed jobs.

Furthermore, the present invention provides a reprographic apparatus , wherein the job that is being processed and/or the unprocessed job is visualised distinctly from the already processed jobs in order to communicate to the user that the job is being processed respectively that the processing of the job has not started yet.

The present invention also provides a reprographic apparatus, wherein the representation of the current location of media comprises, for a job to be processed or a job being processed, a representation of a media input module of the reprographic apparatus, and visualising a stack of media representing the scheduled job comprises visualising a stack of media in the media input module assigned to the job to be processed or the job being processed.

Further scope of applicability of the present invention will become apparent from the detailed description given hereinafter. However, it should be understood that the detailed description and specific examples, while indicating embodiments of the invention, are given by way of illustration only, since various changes and modifications within the scope of the claimed invention will become apparent to those skilled in the art from this detailed description.

### Brief Description of the Drawings

The present invention will become more fully understood from the detailed description given hereinbelow and the accompanying schematical drawings which are given by way of illustration only, and thus are not limitative of the present invention, and wherein:
Fig. 1 shows a diagram of an apparatus wherein the invention is implemented;
Fig. 2 shows a flow chart of a method in accordance with the invention;
Fig. 3 shows a flow chart of a further method in accordance with the invention;
Fig. 4 shows a schematic of a user interface screen of the apparatus in Fig. 1;
Fig. 5 shows a schematic of a further user interface screen of the apparatus in Fig. 1;
Fig. 6 shows a schematic of again a further user interface screen of the apparatus in Fig. 1;
Fig. 7 shows a schematic of again a further user interface screen of the apparatus in Fig. 1;
Fig. 8 shows a schematic of another user interface screen of the apparatus in Fig. 1;
Fig. 9 shows a schematic of again a further user interface screen of the apparatus in Fig. 1;
Fig. 10 shows a schematic of again a further user interface screen of the apparatus in Fig. 1.

### Detailed Description of the Drawings

The present invention will now be described with reference to the accompanying drawings, wherein the same reference numerals have been used to identify the same or similar elements throughout the several views.

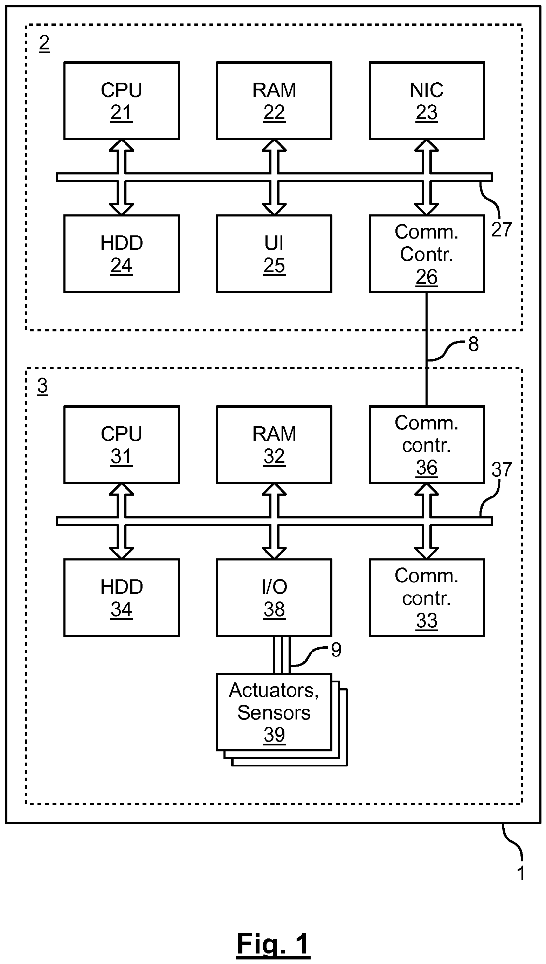

The present invention is well suited for application in reprographic apparatuses. Figure 1 shows a generic diagram of such an apparatus 1. In the following the diagram will be explained with reference to a digital printer. The printer 1 comprises two parts, a controller part 2 and an engine part 3. The controller part 2 is responsible for high level tasks, such as receiving print jobs from a network interface controller (NIC) 23, managing print jobs, communicating with an operator through a user interface (Ul) 25 allowing the operator to manage and configure print jobs, configure the printer 1, and operate the printer 1 in general. In performing these tasks, the controller 2 executes software instructions on a central processing unit (CPU) 21. During the execution of these software instructions data pertaining to the print jobs is stored in a Random Access Memory (RAM) 22 and retrieved for processing by the CPU 21. As RAM is in general volatile memory, data pertaining to print jobs is also stored on a non-volatile memory, hard disk drive (HDD) 24. The components of the controller 2 communicate with each other through a bus 27. The controller further comprises a communication controller 26 to communicate with the engine 3.

The engine 3 is responsible for lower level tasks, such as controlling the dedicated printer hardware components, such as fusers, pinches, drives, paper path switches, position sensors, etc. It comprises a CPU 31 for executing software instructions. The software comprises usually a real-time operating system (RTOS) or quasi real-time operating system as timing is much more crucial compared to the controller 2. The engine 3 generally does not directly interact with the operator. The user interface 25 is dedicated to the controller 2.

The engine 3 further comprises a RAM 32 to temporarily store data. Typically, the engine 3 is not aware of individual print jobs. Instead it is aware of sheets and pages to be printed on these sheets. Data stored in the RAM 32 is typically parts of the bitmaps to be printed. The engine 3 further comprises a hard disk drive 34 to store data if the apparatus is powered down. The engine 3 comprises input/output (I/O) to communicate with actuators and sensors 39 in the printer 1. For that purpose, the actuators and sensors 39 are connected to the I/O 38 through connections 9. The engine 3 also comprises a communication controller 36 to communicate through a connection 8 with the communication controller 26 of the controller 2. For example, the controller 2 sends the bitmaps to be printed through the connection 8 to the engine 2. The engine 3 comprises a further communications controller 33 to allow it to communicate with one or more inline finishers. The components of the engine 3 are connected through a bus 37. The components of the controller 2 and the engine 3 are of a same type as found in personal computers, such as desktop computer, but also server computers. Communication controllers 26 and 36 may be generic off-the-shelf communication components such as network cards, but may also be application specific communication cards enhanced with application specific functionality.

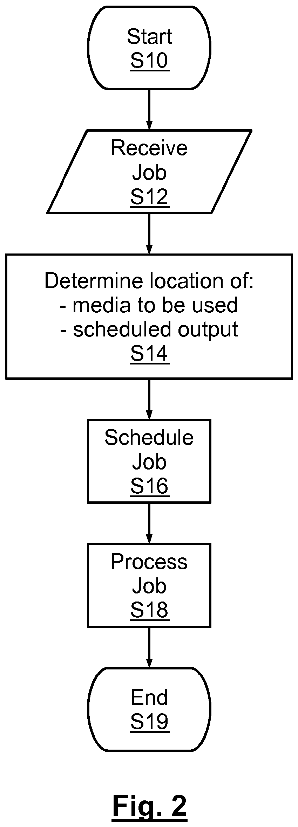

Figure 2 shows the process of the scheduling of a print job by a printer 1. The process starts S10 and receives S12 a print job. The print job is received over a network from another computer such as a user workstation by means of the network card 23. Alternatively, print jobs can be generated by the controller 2, for example by cloning an existing job (for subsequent modification), or by creating a print job from a scanned document obtained from a scan job. For received print jobs, it is determined S14 from what location to obtain media and to what location to output the processed sheets to. These locations may be manually assigned by an operator, determined from input and output tray specifications in the print ticket for the print job, or inferred from the media that is assigned to the pages in the print job. A print job may have one or more input locations. Multiple locations may contain different types of media and if different pages in the print job are to be processed on different media types, multiple locations will be assigned. Furthermore, processing a large print job may require multiple trays with the same media type to be assigned if an input tray cannot hold enough sheets to completely process the print job and the operator does not want the printer 1 to stop printing in order to allow refilling of the input tray.

The print job may be kept by the controller in a waiting queue until it is moved by an operator to a print queue. Alternatively, the controller 2 automatically moves the job to the print queue. Upon entering the print queue, the print job is scheduled S16 for printing. Scheduled generally means that the print job is placed at a specific position in the print queue among other print jobs. In general print queues act as first-in-first-out queues, but it is possible to configure the printer 1 to handle print jobs with specific properties with higher priority, the print job passing earlier print jobs with lower priorities. As an alternative to scheduling a print order of print jobs, a print time may be scheduled for a job, although this is less common. It is not uncommon though that a printer 1 schedules a print order of print jobs, but is nevertheless capable of predicting a start time for a print job.

As soon as all print jobs preceding the print job have been processed, the print job moves from the front position in the print queue to be processed S18. After a print job has completed, the process finishes S19 with regard to this particular print job. Of course if further print jobs remain in the print queue, the printer 1 will proceed processing these print jobs.

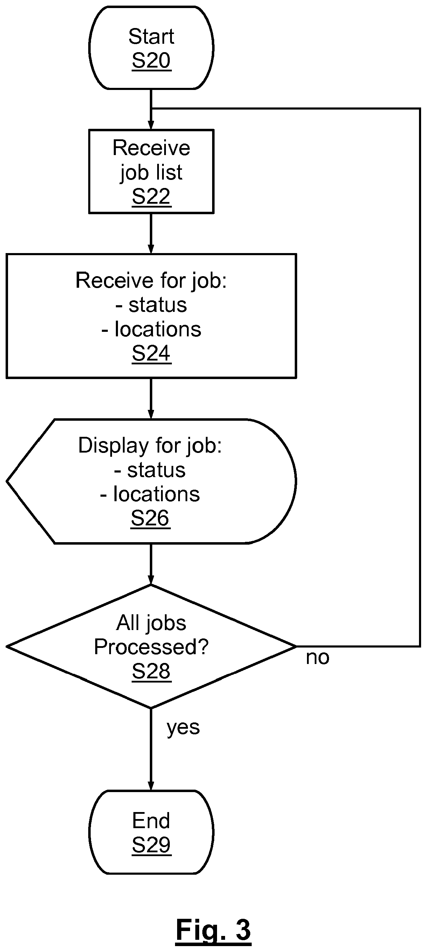

Whereas the process described with reference to Figure 2, describes the processing of a print job with regard to the printing process, Figure 3 describes the process of representing in a user interface 25 the processing of a print job. This process is generally run in parallel to the above process described with reference to Figure 2. The user interface 25 may be a local user interface, but may also be a remote user interface such as a web interface accessed from a workstation through a network. This process starts S20 for example by starting the printer 1 or alternatively by navigating to an appropriate screen in the user interface.

A job list with jobs scheduled in the print queue is received S22 from the scheduler by a user interface engine which is responsible for generating the appropriate screens in the user interface 25. Furthermore, for a job in the job list a status is received S24, wherein the status might comprise information on whether the job is presently being printed, has completed printing, or is only scheduled for printing but the printing of the job has not been started yet. Furthermore, additional information might be included such as a estimated start time for printing the job, an estimated completion time for printing the job, or an actual completion time.

Furthermore, for a job one or more locations are received S24: for jobs that have not started yet, this may be locations that have been assigned to the job for delivering media for printing on, as well as one or more locations that have been assigned for delivering the printed sheets to once they have been printed. For a print job that is presently being printed, the same applies. For a print job for which printing has completed, usually only the locations to which the sheets have been delivered is of interest as this is the location where the operator should collect the print job.

For the jobs thus received the user interface displays S26 the locations as well as the jobs assigned to these locations.

This process is run cyclically in order to update the screen when any information displayed changes, for example changes due to the parallel running of the process of Figure 2. This cycle is shown in Figure 3 as the no-branch from S28 looping back to S22. However, this may as well be implemented as an event based updating mechanism, wherein an event informs the user interface 25 of any updated information, and step S26 is repeated to reflect the update in the displayed information. As soon as there are no jobs left to process no more updating is needed and the process ends S29 to be restarted as soon as a new job is scheduled S14.

The user interface 25 may show a single screen with all the possible locations at the same time providing to the user an overview of all locations and wherein the user can more-or-less see a print job move from a paper input module to an output tray. Alternatively, or supplemental, the user interface provides detailed screens of individual locations providing more details on the particular location and the jobs assigned to the location.

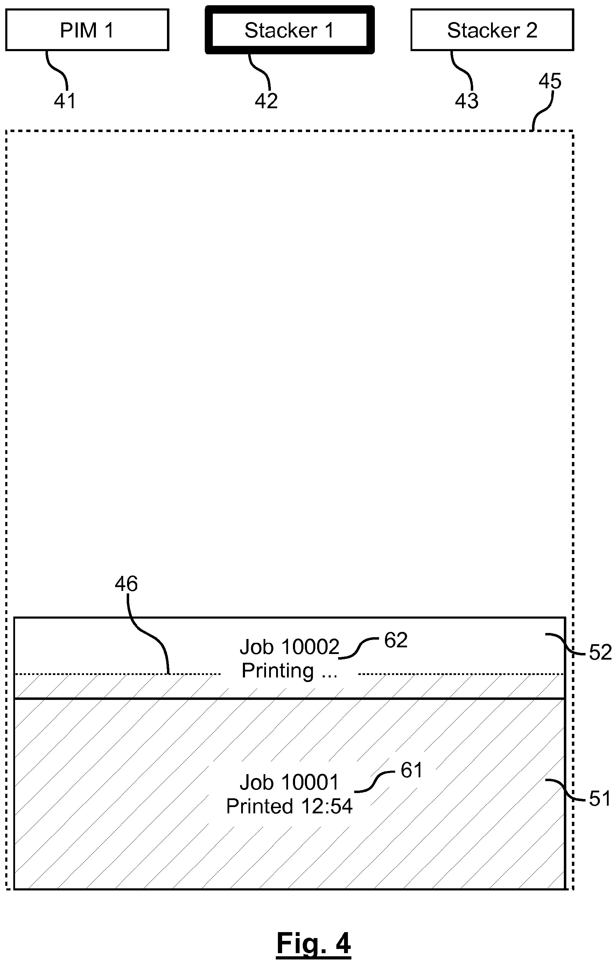

An example screen (Figure 4) of the user interface 25 shows buttons 41-43 for selecting a location to be displayed in the screen, in the shown example a first paper input module "PIM 1", a first output location "Stacker 1", and a second output location "Stacker 2". In this case "Stacker 1" is selected to be shown in detail. "Stacker 1" being selected is visually indicated by the button being highlighted. A frame 45 represents the full capacity of the selected location, "Stacker 1" in this example. Furthermore, the stack of sheets output (both already printed as well as scheduled to be printed) is shown respectively by boxes 51 and 52. Box 51 represents the stack of sheets of a first print job 10001 that has completed printing and is at the bottom of the stack. A label 61 is displayed in the stack of the first print job and provides further information on the print job. In this case it shows a job number "10001", a status "Printed" of the print job, and a completion time "12:54" of the print job, which is the time the last sheet of the print job was delivered to the stacker.

A second job 10002 is represented by box 52 on top of the first job 10001 showing that this second job 10002 is output on top of the stack of sheets of the first job 10001. For this second job 10002 a label provides further information: the job number is "10002" and the status of the job is that it is currently "Printing". Furthermore, the hatched area 46 shows to what extend the stacks are actually completed. As job 10001 was completed, the whole box 51 is filled with the hatched area 46. The box 52 is only partly filled with the hatched area 46 as job 10002 is still in the process of being printed and not all sheets have been delivered to the stacker yet. The height of the hatched area 46 represents to what extend the sheets are actually already present in the stacker. The empty part of box 52 represents what part of the stacker is still empty, but which space has already been assigned to job 10002.

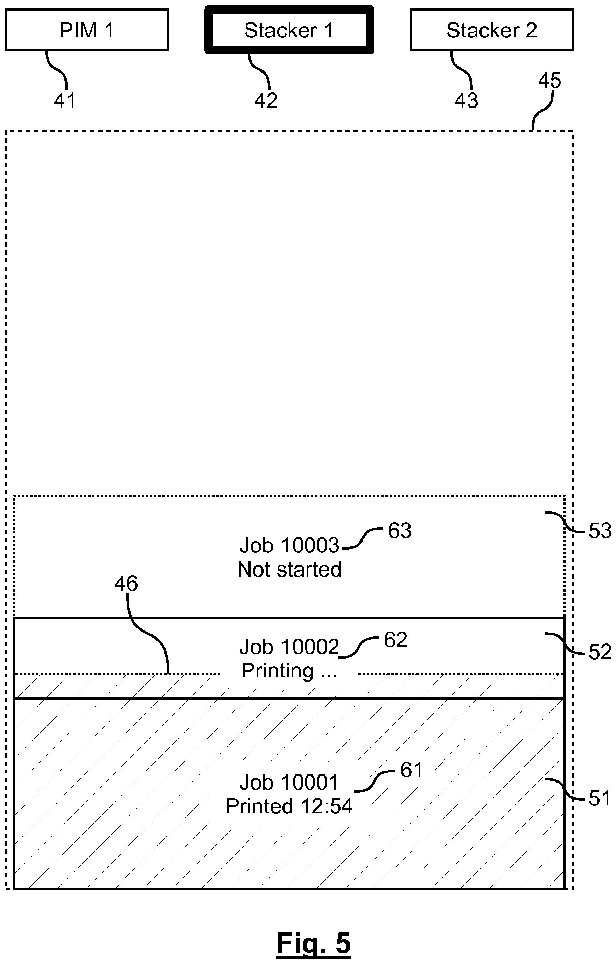

Figure 5 shows a further screen wherein a further job 10003 has been submitted and scheduled S14 for printing. Compared to Figure 4, all elements are unchanged, except a new box 53 has been added to represent the stack of job 10003. The label 63 of the new job shows its job number "10003" and the status "Not started". As the printer 1 is still printing job 10002, job 10003 has not started yet (as reflected by the status in the label 63) and the hatched area 46 has not reached job 10003 yet. So the box 53 shows that space in the stacker has been assigned to job 10003, but none of the sheets for this job 10003 have been delivered to the stacker yet.

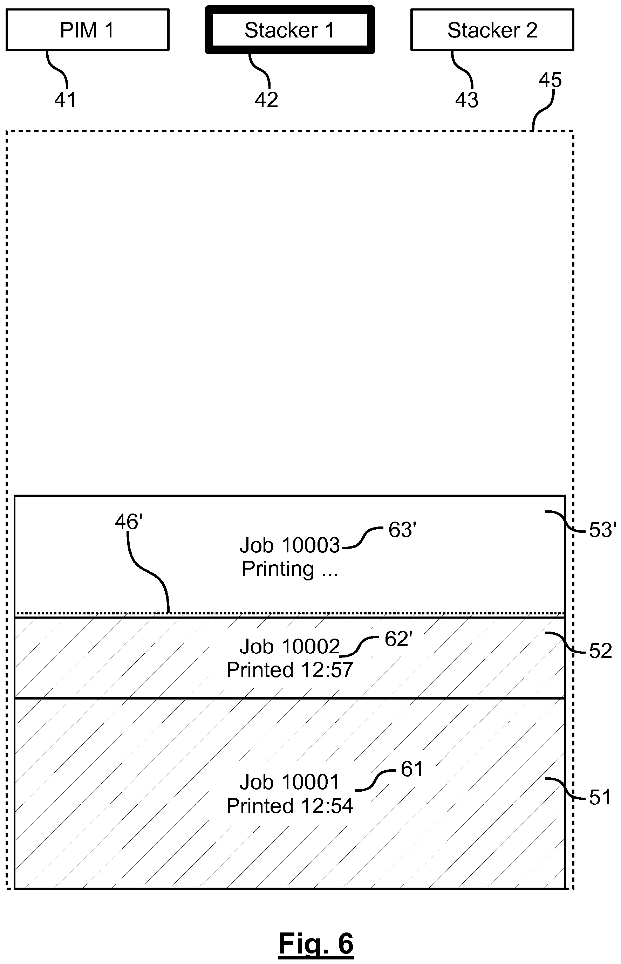

As time progresses, print job 10002 will at some point complete and the printer 1 will proceed with print job 10003. Figure 6 shows the screen right after print job 10003 started to be printed. The label 62' for print job 10002 now shows an updated status "Printed" together with the time of completion of the job "12:57". Furthermore, the status of print job 10003 has been updated as is reflected by the label 63', now showing "Printing..." Furthermore, the hatched area 46' now just reaches into the box 53 representing the stack of sheets of print job 10003 showing that the first sheets of print job 10003 have been delivered to the stacker.

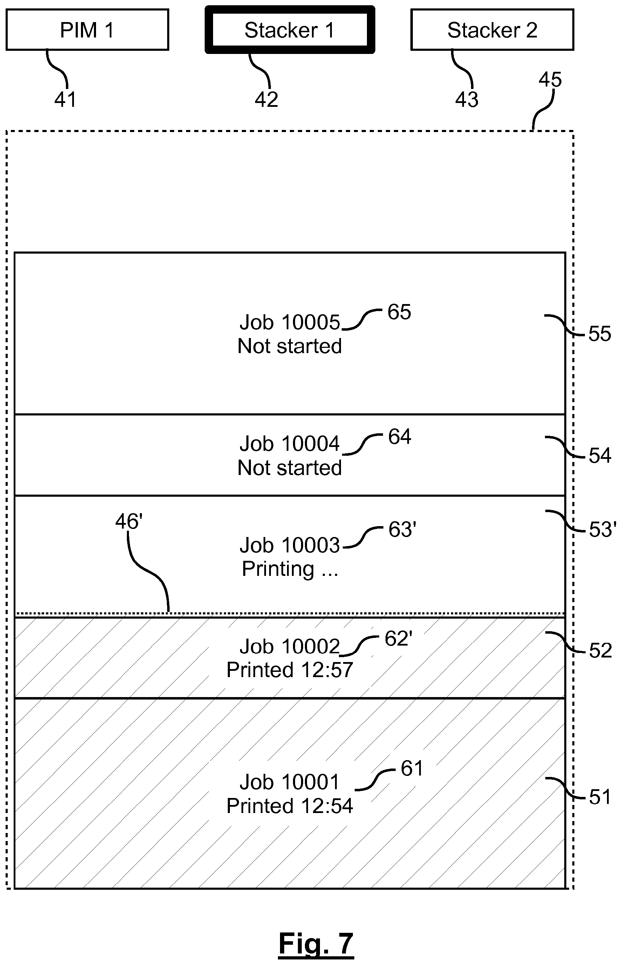

Figure 7 shows a further screen, wherein, just after job 10003 started printing, two further jobs 10004, 10005, have been scheduled S14 for printing. The boxes 54 and 55 represent the space in the stacker that will be occupied by the stacks of sheets for these jobs. Labels 64 and 65 indicate the job numbers (10004 and 10005 respectively) and the statuses of these jobs (both "Not started"). As shown by the label 63' job 10003 is still being printed, and only a few sheets have actually been delivered to the stacker as indicated by the shaded area 46' extending just into box 53' representing the stack of job 10003.

It should be noted that the screens displaying the output locations may deviate in some situations from the actual situations. For example, stacker hardware often has a dedicated eject or open command to eject a stack from the stacker or open a hatch to allow removal of a stack. This command is used in the invention to reset the output location sheets to display an empty location. Stackers usually only have a sensor to detect a full or near-full situation, and usually lack a sensor to report an actual stack height. Therefore, if an operator does not remove the stack or only removes part of the stack, this is usually not detected as such. Without a sensor to report actual stack height, the invention will erroneously assume an empty stacker and display a screen with an empty stacker while the stacker is not really empty. In addition to the eject or open command, the invention may also use the falling off of the full or near-full signals of the stacker or a combination of such a signal and the eject or open command.

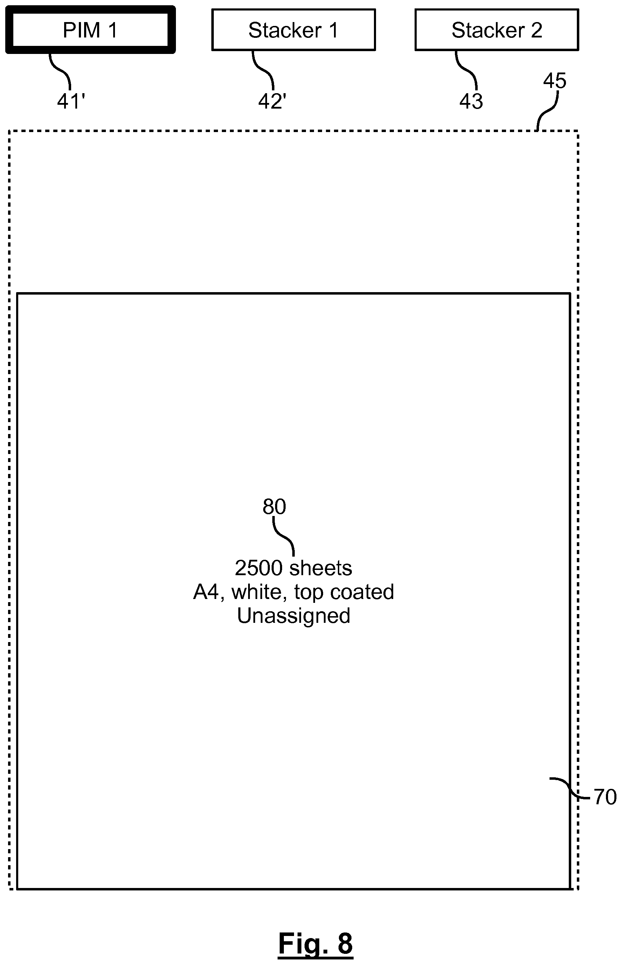

Not only the sheet assignment for jobs in the output locations may be visualised by the present invention. Figure 8 shows a screen being displayed when button 41 in one of the screens in Figures 4-7 is pressed. To indicate that Paper Input Module 1 ("PIM 1") has been selected, button 41' becomes highlighted. Simultaneously, button 42' representing "Stacker 1" is no longer highlighted as "Stacker 1" is no longer selected to be displayed. The area 45 again represents the full capacity of the location, i.e. the full capacity of "PIM 1". Figure 8 displays a situation wherein none of the scheduled jobs (if any) have been assigned media from "PIM 1". Box 70 represent all sheets present in "PIM 1" that have not been assigned to any print job. Label 80 provides some information, such as the number of unassigned sheets in the location (2500 sheets), the type of media in the location (A4 sized, white coloured, top coated media), and whether the stack represented by box 70 are assigned to a print job or not. As Figure 8 does not show any further boxes, there are no sheets in "PIM 1" that have been assigned to a print job. The screen in Figure 8 may correspond to the situation after the printer 1 has been powered on, or alternatively a situation after job 10001 had completed but before job 10002 was scheduled for printing as in Figure 4. (The situation of Figure 8 would then have occurred before the situation of Figure 4 would have occurred).

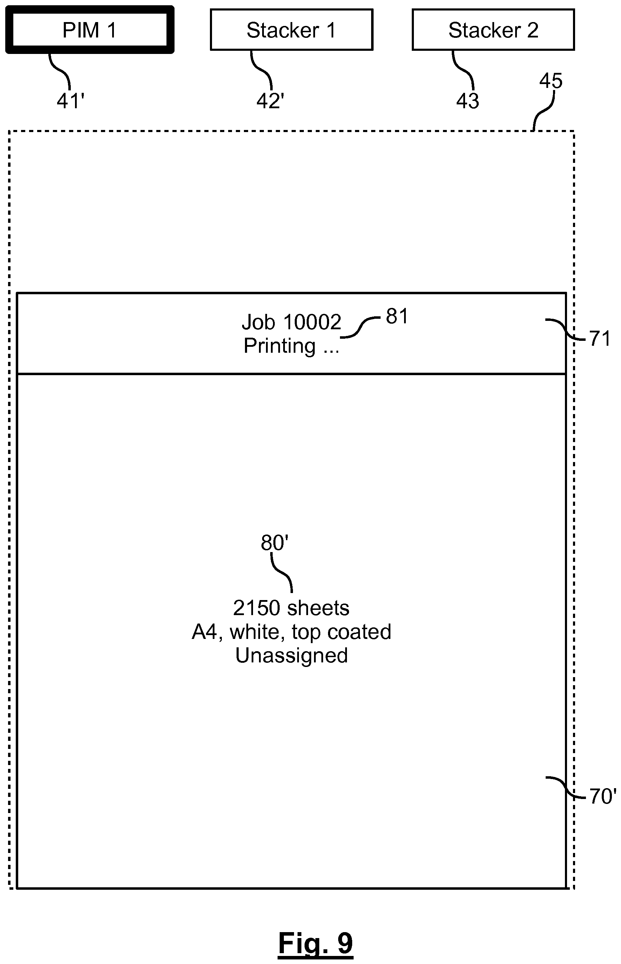

When job 10002 is scheduled for printing, sheets in "PIM 1" will actually be assigned to job 10002. If the print engine is idle at the moment job 10002 is scheduled, printing will start immediately, and the screen will immediately be updated with sheets assigned to job 10002 and this job having a print status "Printing ..." Figure 9 shows such a resulting screen, with a box 71 representing the stack of sheets assigned to job 10002, and label 81 providing the job number of the job and the status of the job. Box 70' has now shrunk as part of the original 2500 sheets have been assigned to job 10002. Label 80' has also updated and now reflects that only 2150 remaining sheets are unassigned.

Note that in alternative embodiments, label 81 may also show additional information such as the number of sheets actually assigned to job 10002. Furthermore, a shaded area similar to the shaded area 46 for the output locations may be shown to represent the actual stack height.

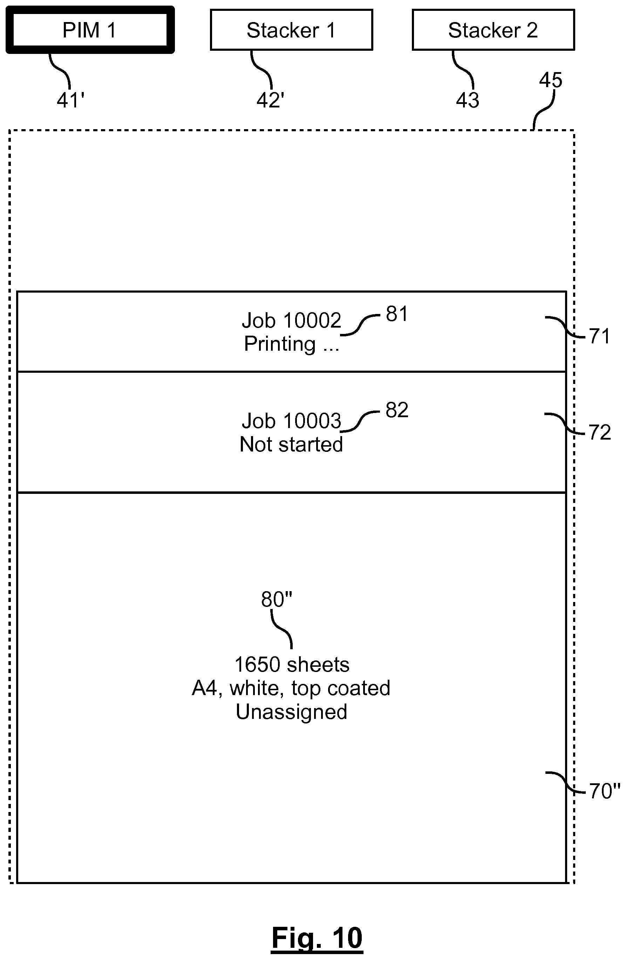

Figure 10 shows the screen representing "PIM 1" when a further job (job 10003) is scheduled for printing. An additional box 72 is displayed representing the stack of sheets assigned to this job and a label 82 provides further details such as the job number (10003) and the status ("Not started"). The box 70" is updated to reflect that a smaller number of sheets is now part of stack of unassigned sheets. Label 80" has also been updated to reflect that only 1650 sheets remain unassigned.

It should be noted that it is not trivial to determine exact sheet counts in most commercial paper input modules, and therefore the actual sheet count and the estimate shown in the screens may differ to some degree.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. Method for tracking jobs in a reprographic apparatus (1) comprising at least one media output location (42, 43) and at least one media source location (41'), the method comprising:
- receiving a job (10001, 10002, 10003),
- schedule the job (10001, 10002, 10003) for processing,
- determining for a job:
• the current media source location (41') of media for usage in processing the job, and
• the scheduled output location (42) of media for usage in processing the job,
- processing the scheduled job,
- displaying a representation (45) of the determined current media source location (41'), the representation comprising visualising a stack of media representing the scheduled job (10002, 10003), and
- displaying a representation (45) of the determined scheduled output location (42), the representation comprising visualising a stack (53) of media representing a scheduled job (10003), a stack (52) of media representing a currently being processed job (10002), and a stack (51) of media representing a processed job (10001),
wherein each visualisation of a stack (51, 52, 53, 71, 72) of media representing a job (10001, 10002, 10003) comprises a job identifier (61, 62, 63, 81, 82),
the size of each visualised stack of sheets is proportional to the size of the actual stack of sheets for a job, and
the representation of the determined current location of media comprises, for a job to be processed or a job being processed, a representation of a media input module of the reprographic apparatus, and visualising a stack of media representing the scheduled job comprises visualising a stack of media in the media input module assigned to the job to be processed or the job being processed.

2. The method according to claim 1, wherein the representation of the output location shows a processed job stacked on top of other processed jobs that have been delivered earlier to the output location.

3. The method according to claim 1 or 2, wherein the representation of the scheduled output location shows a job that is being processed on top of already processed jobs.

4. The method according to any of claims 1-3, wherein the representation of the output location shows an unprocessed job stacked on top of processed jobs.

5. The method according to claim 3 or 4, wherein the job that is being processed and/or the job that is yet unprocessed is visualised distinctly from the already processed jobs in order to communicate to the user that the job is being processed respectively that processing of the job has not started yet.

6. Method according to any of the claims 1- 5, wherein the representation also comprises visualising a stack (76) of media representing media which is unassigned to a scheduled job.

7. Computer-program product embodied on a non-transitory computer readable medium comprising instructions that, when executed on a processor, cause the processor to perform the steps of the method of any of claims 1-6.

8. Reprographic apparatus comprising:
- a job reception device configured to receive a reprographic job,
- a job scheduling device connected to the job reception device and configured to schedule a received job for processing,
- a location determining device configured to determine for a scheduled job:
• the current location of media for usage in processing the job, and
• the scheduled output location of media for usage in processing the job,
- a processing device configured to process the scheduled job,
- a display device configured to display a representation of the determined current location, the representation comprising visualising a stack of media representing the scheduled job and to display a representation of the determined scheduled output location, the representation comprising visualising a stack of media representing a scheduled job (10003), a stack (52) of media representing a currently being processed job (10002), and a stack (51) of media representing a processed job (10001),
wherein each visualisation of a stack (51, 52, 53) of media representing a job (10001, 10002, 10003) comprises a job identifier (61, 62, 63), the size of each visualised stack of sheets is proportional to the size of the actual stack of sheets for a job, and the representation of the determined current location of media comprises, for a job to be processed or a job being processed, a representation of a media input module of the reprographic apparatus, and visualising a stack of media representing the scheduled job comprises visualising a stack of media in the media input module assigned to the job to be processed or the job being processed.

9. The reprographic apparatus according to claim 8, wherein the representation of the output location shows a processed job stacked on top of other processed jobs that have been delivered earlier to the output location.

10. The reprographic apparatus according to claim 8 or 9, wherein the representation of the scheduled output location shows a job that is being processed on top of already processed jobs.

11. The reprographic apparatus according to any of claims 8-10, wherein the representation of the output location shows an unprocessed job stacked on top of processed jobs.

12. The reprographic apparatus according to claim 9, wherein the job that is being processed and/or the unprocessed job is visualised distinctly from the already processed jobs in order to communicate to the user that the job is being processed respectively that the processing of the job has not started yet.

## Patentansprüche

1. Verfahren zur Verfolgung von Aufträgen in einer reprographischen Vorrichtung (1), die wenigstens einen Ausgabeort (42, 43) für Medien und wenigstens einen Quellenort (41') für Medien aufweist, welches Verfahren die folgenden Schritte aufweist:
- Empfangen eines Auftrags (10001, 10002, 10003),
- Planen des Auftrags (10001, 10002, 10003) für die Bearbeitung,
- Bestimmen, für einen Auftrag:
- des aktuellen Quellenortes (41') für Medien zum Gebrauch bei der Bearbeitung des Auftrags,
- des geplanten Ausgabeortes (42) für Medien zum Gebrauch bei der Bearbeitung des Auftrags,
- Bearbeiten des geplanten Auftrags,
- Anzeigen einer Repräsentation (45) des bestimmten aktuellen Quellenortes (41') für die Medien, wobei die Repräsentation eine Visualisierung eines Stapels von Medien enthält, der den geplanten Auftrag (10002, 10003) repräsentiert, und
- Anzeigen einer Repräsentation (45) des bestimmten geplanten Ausgabeortes (42), wobei die Repräsentation eine Visualisierung eines Stapels (53) von Medien, die den geplanten Auftrag (10003) repräsentieren, eines Stapels (52) von Medien, die einen aktuell bearbeiteten Auftrag (10003) repräsentieren, und eines Stapels (51) von Medien enthält, die einen bearbeiteten Auftrag (10001) repräsentieren,
wobei jede Visualisierung eines Stapels (51, 52, 53, 71, 72) von Medien, die einen Auftrag (10001, 10002, 10003) repräsentieren, eine Auftragskennung (61, 62, 63, 81, 82) enthält,
die Größe jedes visualisierten Stapels von Bögen proportional zu der Größe des tatsächlichen Stapels von Bögen für einen Auftrag ist und
die Repräsentation des bestimmten aktuellen Ortes von Medien für einen zu bearbeitenden Auftrag oder einen in Bearbeitung befindlichen Auftrag eine Repräsentation eines Medieneingabemoduls der reprographischen Vorrichtung enthält und die Visualisierung eines Stapels von Medien, die den geplanten Auftrag repräsentieren, die Visualisierung eines Stapels von Medien in dem Medieneingabemodul einschließt, das dem zu bearbeitenden oder in Bearbeitung befindlichen Auftrag zugewiesen ist.

2. Das Verfahren nach Anspruch 1, bei dem die Repräsentation des Ausgabeortes einen bearbeiteten Auftrag zeigt, der auf andere bearbeitete Aufträge aufgestapelt ist, die früher an diesen Ausgabeort geliefert wurden.

3. Das Verfahren nach Anspruch 1 oder 2, bei dem die Repräsentation des geplanten Ausgabeortes einen Auftrag, der gerade bearbeitet wird, auf der Oberseite von bereits bearbeiteten Aufträgen zeigt.

4. Das Verfahren nach einem der Ansprüche 1 bis 3, bei dem die Repräsentation des Ausgabeortes einen unbearbeiteten Auftrag zeigt, der auf bearbeitete Aufträge aufgestapelt ist.

5. Das Verfahren nach Anspruch 3 oder 4, bei dem der Auftrag, der gerade bearbeitet wird, und/oder der Auftrag, der noch unbearbeitet ist, unterscheidbar von bereits bearbeiteten Aufträgen visualisiert wird, um dem Benutzer mitzuteilen, dass der Auftrag in Bearbeitung ist, bzw. dass die Bearbeitung des Auftrags noch nicht angefangen hat.

6. Das Verfahren nach einem der Ansprüche 1 bis 5, bei dem die Repräsentation auch die Visualisierung eines Stapels (76) von Medien einschließt, die Medien repräsentieren, die keinem geplanten Auftrag zugewiesen sind.

7. Computerprogrammprodukt auf einem nichtflüchtigen, von einem Computer lesbaren Medium mit Instruktionen die, wenn sie auf einem Prozessor ausgeführt werden, den Prozessor veranlassen, die Schritte des Verfahrens nach einem der Ansprüche 1 bis 6 auszuführen.

8. Reprographische Vorrichtung mit:
- einer Auftragsannahmeeinrichtung, die dazu konfiguriert ist, einen reprographischen Auftrag anzunehmen,
- einer Auftragsplanungseinrichtung, die mit der Auftragsannahmeeinrichtung verbunden und dazu konfiguriert ist, einen empfangenen Auftrag für die Bearbeitung zu planen,
- einer Ortsbestimmungseinrichtung, die dazu konfiguriert ist, für einen geplanten Auftrag zu bestimmen,:
- einen aktuellen Ort von Medien zum Gebrauch bei der Bearbeitung des Auftrags und
- den geplanten Ausgabeort für Medien zum Gebrauch bei der Bearbeitung des Auftrags
- einer Bearbeitungseinrichtung, die dazu konfiguriert ist, den geplanten Auftrag zu bearbeiten,
- einer Anzeigeeinrichtung, die dazu konfiguriert ist, eine Repräsentation des bestimmten aktuellen Ortes anzuzeigen, wobei die Repräsentation eine Visualisierung eines Stapels von Medien enthält, die den geplanten Auftrag repräsentieren, und eine Repräsentation des bestimmten geplanten Ausgabeortes anzuzeigen, wobei die Repräsentation eine Visualisierung eines Stapels von Medien, die einen geplanten Auftrag (10003) repräsentieren, eines Stapels (52) von Medien, die einen aktuell in Bearbeitung befindlichen Auftrag (10002) repräsentieren, und eines Stapels (51) von Medien einschließt, die einen bearbeiteten Auftrag (10001) repräsentieren,
wobei jede Visualisierung eines Stapels (51, 52, 53) von Medien, die einen Auftrag (10001, 10002, 10003) repräsentieren, eine Auftragsskennung (61, 62, 63) enthält, die Größe jedes visualisierten Stapels von Bögen zu der Größe des tatsächlichen Stapels von Bögen für einen Auftrag proportional ist, und die Repräsentation des bestimmten aktuellen Ortes von Medien für einen zu bearbeitenden Auftrag oder einen in Bearbeitung befindlichen Auftrag eine Repräsentation eines Medieneingabemoduls der reprographischen Vorrichtung einschließt und das Visualisieren eines Stapels von Medien, der den geplanten Auftrag repräsentiert, die Visualisierung eines Stapels von Medien in dem Medieneingabemodul einschließt, das dem zu bearbeiteten Auftrag oder dem gerade bearbeiteten Auftrag zugewiesen ist.

9. Die reprographische Vorrichtung nach Anspruch 8, bei der die Repräsentation des Ausgabeortes einen bearbeiteten Auftrag zeigt, der auf andere bearbeitete Aufträge aufgestapelt ist, die früher an diesen Ausgabeort geliefert wurden.

10. Die reprographische Vorrichtung nach Anspruch 8 oder 9, bei der die Repräsentation ders geplanten Ausgabeortes einen gerade bearbeiteten Auftrag zeigt, der auf bereits bearbeitete Aufträge aufgestapelt ist.

11. Die reprographische Vorrichtung nach einem der Ansprüche 8 bis 10, bei der die Repräsentation des Ausgabeortes einen unbearbeiteten Auftrag zeigt, der auf bearbeitete Aufträge aufgestapelt ist.

12. Die reprographische Vorrichtung nach Anspruch 9, bei der der Auftrag, der gerade bearbeitet wird, und/oder der unbearbeitete Auftrag unterscheidbar von den bereits bearbeiteten Aufträgen visualisiert wird, um dem Benutzer mitzuteilen, dass der Auftrag gerade bearbeitet wird bzw. dass die Bearbeitung des Auftrag noch nicht begonnen hat.

## Revendications

1. Procédé de suivi de tâches dans un appareil reprographique (1) comprenant au moins un emplacement de sortie de supports (42, 43) et au moins un emplacement d'origine de supports (4T), le procédé comprenant :
- la réception d'une tâche (10001, 10002, 10003),
- la planification de la tâche (10001, 10002, 10003) pour le traitement,
- la détermination pour une tâche :
- l'emplacement actuel d'origine de supports (4T) de supports pour l'utilisation dans le traitement de la tâche, et
- l'emplacement planifié de sortie (42) de supports pour l'utilisation dans le traitement de la tâche,
- le traitement de la tâche planifiée,
- l'affichage d'une représentation (45) de l'emplacement actuel d'origine de supports (41') déterminé, la représentation comprenant la visualisation d'une pile de supports représentant la tâche planifiée (10002, 10003), et
- l'affichage d'une représentation (45) de l'emplacement planifié de sortie (42) déterminé, la représentation comprenant la visualisation d'une pile (53) de supports représentant une tâche planifiée (10003), une pile (52) de supports représentant une tâche actuellement en cours de traitement (10002), et une pile (51) de supports représentant une tâche traitée (10001),
dans lequel chaque visualisation d'une pile (51, 52, 53, 71, 72) de supports représentant une tâche (10001, 10002, 10003) comprend un identificateur de tâche (61, 62, 63, 81, 82),
la taille de chaque pile de feuilles visualisée est proportionnelle à la taille de la pile de feuilles actuelle pour une tâche, et
la représentation de l'emplacement actuel déterminé de supports comprend, pour une tâche à traiter ou une tâche en cours de traitement, une représentation d'un module d'entrée de supports de l'appareil reprographique, et la visualisation d'une pile de supports représentant la tâche planifiée comprend la visualisation d'une pile de supports dans le module d'entrée de supports attribué à la tâche à traiter ou la tâche en cours de traitement.

2. Procédé selon la revendication 1, dans lequel la représentation de l'emplacement de sortie montre une tâche traitée empilée au-dessus d'autres tâches traitées qui ont été délivrées antérieurement à l'emplacement de sortie.

3. Procédé selon la revendication 1 ou 2, dans lequel la représentation de l'emplacement planifié de sortie montre une tâche qui est en cours de traitement au-dessus de tâches déjà traitées.

4. Procédé selon l'une quelconque des revendications 1-3, dans lequel la représentation de l'emplacement de sortie montre une tâche non traitée empilée au-dessus de tâches traitées.

5. Procédé selon la revendication 3 ou 4, dans lequel la tâche qui est en cours de traitement et/ou la tâche qui n'est pas encore traitée sont visualisées séparément de tâches déjà traitées, de manière à communiquer à l'utilisateur que la tâche est en cours de traitement, respectivement que le traitement de la tâche n'a pas encore commencé.

6. Procédé selon l'une quelconque des revendications 1-5, dans lequel la représentation comprend également la visualisation d'une pile (76) de supports représentant des supports qui ne sont pas attribués à une tâche planifiée.

7. Produit de programme informatique incorporé sur un support non transitoire lisible par ordinateur comprenant des instructions qui, quand elles sont exécutées sur un processeur, amènent le processeur à réaliser les étapes du procédé selon l'une quelconque des revendications 1-6.

8. Appareil reprographique comprenant :
- un dispositif de réception de tâche configuré pour recevoir une tâche reprographique,
- un dispositif de planification de tâche connecté au dispositif de réception de tâche et configuré pour planifier une tâche reçue pour le traitement,
- un dispositif de détermination d'emplacement configuré pour déterminer pour une tâche planifiée :
- l'emplacement actuel de supports pour l'utilisation dans le traitement de la tâche, et
- l'emplacement planifié de sortie de supports pour l'utilisation dans le traitement de la tâche,
- un dispositif de traitement configuré pour traiter la tâche planifiée,
- un dispositif d'affichage configuré pour afficher une représentation de l'emplacement actuel déterminé, la représentation comprenant la visualisation d'une pile de supports représentant la tâche planifiée et pour afficher une représentation de l'emplacement de sortie planifié déterminé, la représentation comprenant la visualisation d'une pile de supports représentant une tâche planifiée (10003), une pile (52) de supports représentant une tâche actuellement en cours de traitement (10002), et une pile (51) de supports représentant une tâche traitée (10001),
dans lequel chaque visualisation d'une pile (51, 52, 53) de supports représentant une tâche (10001, 10002, 10003) comprend un identificateur de tâche (61, 62, 63), la taille de chaque pile de feuilles visualisée est proportionnelle à la taille de la pile de feuilles actuelle pour une tâche, et la représentation de l'emplacement actuel déterminé de supports comprend, pour une tâche à traiter ou une tâche en cours de traitement, une représentation d'un module d'entrée de supports de l'appareil reprographique, et la visualisation d'une pile de supports représentant la tâche planifiée comprend la visualisation d'une pile de supports dans le module d'entrée de supports attribué à la tâche à traiter ou la tâche en cours de traitement.

9. Appareil reprographique selon la revendication 8, dans lequel la représentation de l'emplacement de sortie montre une tâche traitée empilée au-dessus d'autres tâches traitées qui ont été délivrées antérieurement à l'emplacement de sortie.

10. Appareil reprographique selon la revendication 8 ou 9, dans lequel la représentation de l'emplacement planifié de sortie montre une tâche qui est en cours de traitement au-dessus de tâches déjà traitées.

11. Appareil reprographique selon l'une quelconque des revendications 8-10, dans lequel la représentation de l'emplacement de sortie montre une tâche non traitée empilée au-dessus de tâches traitées.

12. Appareil reprographique selon la revendication 9, dans lequel la tâche qui est en cours de traitement et/ou la tâche qui n'est pas encore traitée sont visualisées séparément de tâches déjà traitées, de manière à communiquer à l'utilisateur que la tâche est en cours de traitement, respectivement que le traitement de la tâche n'a pas encore commencé.
